# EUROPEAN PATENT SPECIFICATION

(11) **EP 3 972 364 B1**
(45) Date of publication and mention of the grant of the patent: **29.10.2025**
(21) Application number: 20806808.0
(22) Date of filing: 14.05.2020
(51) Int. Cl.: H04W 72/04, H04W 72/12, H04W 28/04, H04W 28/16, H04L 1/1829, H04L 1/1607, H04L 5/00, H04B 7/022, H04L 1/1867

(54) **TERMINAL AND WIRELESS COMMUNICATION METHOD**
ENDGERÄT UND DRAHTLOSKOMMUNIKATIONSVERFAHREN
TERMINAL ET PROCÉDÉ DE COMMUNICATION SANS FIL

(30) Priority: 15.05.2019 JP 2019092317
(43) Date of publication of application: 23.03.2022
(73) Proprietor: NTT DOCOMO, INC., Chiyoda-Ku Tokyo 100-6150 (JP)
(72) Inventor: MATSUMURA, Yuki, Tokyo 100-6150 (JP); NAGATA, Satoshi, Tokyo 100-6150 (JP); GUO, Shaozhen, Beijing 100190 (CN); WANG, Jing, Beijing 100190 (CN); HOU, Xiaolin, Beijing 100190 (CN)
(74) Representative: Hoffmann Eitle
(86) International application number: PCT/JP2020/019321
(87) International publication number: WO 2020/230860

(56) References cited:
- HUAWEI ET AL: "Enhancements on multi-TRP/panel transmission", vol. RAN WG1, no. Taipei; 20190121 - 20190125, 12 January 2019 (2019-01-12), XP051575644, Retrieved from the Internet <URL:http://www.3gpp.org/ftp/tsg%5Fran/WG1%5FRL1/TSGR1%5FAH/NR%5FAH%5F1901/Docs/R1%2D1900017%2Ezip> [retrieved on 20190112]
- HUAWEI ET AL: "Enhancements on multi-TRP/panel transmission in NR", vol. RAN WG1, no. Gothenburg, Sweden; 20180820 - 20180824, 11 August 2018 (2018-08-11), pages 1 - 10, XP051516486, Retrieved from the Internet <URL:http://www.3gpp.org/ftp/tsg%5Fran/WG1%5FRL1/TSGR1%5F94/Docs/R1%2D1809117%2Ezip> [retrieved on 20180811]
- PANASONIC: "On multi-TRP enhancements for NR MIMO in Rel. 16", 3GPP DRAFT; R1-1907031_PANASONIC_NR_MIMO_MULTI_TRP_ENHANCEMENTS_VFINAL, 3 May 2019 (2019-05-03), Reno, USA, pages 1 - 16, XP051709064
- NTT DOCOMO; INC: "Enhancements on multi-TRP/panel transmission", 3GPP DRAFT; R1-1906224, 3 May 2019 (2019-05-03), Reno, USA, pages 13, XP051708263
- QUALCOMM INCORPORATED: "Multi-TRP Enhancements", 3GPP DRAFT; R1-1907289 MULTI-TRP ENHANCEMENTS, 4 May 2019 (2019-05-04), Reno, Nevada, USA, pages 1 - 25, XP051709312
- CATT: "On multi-TRP/panel transmission", 3GPP DRAFT; R1-1906345, 4 May 2019 (2019-05-04), Reno, USA, pages 1 - 17, XP051708380

## Description

### Technical Field

The present disclosure relates to a terminal, a base station and a radio communication method in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (e.g., referred to as "5th generation mobile communication system (5G)," "5G+ (plus)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

HUAWEI ET AL: "Enhancements on multi-TRP/panel transmission", 3GPP DRAFT; R1-1900017 relates to PDCCH design, reliability/robustness transmission based on multiple TRPs and single PDCCH design.

HUAWEI ET AL: "Enhancements on multi-TRP/panel transmission in NR", 3GPP DRAFT; R1-1809117 relates to technical enhancements for multi-TRP/panel transmissions in Rel-16.

### Summary of Invention

### Technical Problem

For future radio communication systems (for example, NR), a scheme in which one or a plurality of transmission/reception points (TRPs) (multiple TRPs) perform DL transmission to a user terminal (User Equipment (UE)) has been under study.

As one method of Hybrid Automatic Repeat reQuest ACKnowledgement (HARQ-ACK) feedback, separate HARQ-ACK feedback and joint HARQ-ACK feedback have been under study.

### Solution to Problem

A terminal according to an aspect of the present disclosure according to claim 1.

### Brief Description of Drawings

FIGS. 1A to 1D are each a diagram to show an example of a multi-TRP scenario;
FIG. 2 is a diagram to show an example of switching of a feedback type according to a third embodiment;
FIG. 3 is a diagram to show an example of a schematic structure of a radio communication system according to one embodiment;
FIG. 4 is a diagram to show an example of a structure of a base station according to one embodiment;
FIG. 5 is a diagram to show an example of a structure of a user terminal according to one embodiment; and
FIG. 6 is a diagram to show an example of a hardware structure of the base station and the user terminal according to one embodiment.

### Description of Embodiments

### (Multiple TRPs)

For NR, a scheme in which one or a plurality of transmission/reception points (TRPs) (multiple TRPs) perform DL transmission to the UE by using one or a plurality of panels (multiple panels) has been under study. A scheme in which the UE performs UL transmission to one or a plurality of TRPs has also been under study.

Note that the plurality of TRPs may correspond to the same cell identifier (ID), or may correspond to different cell IDs. The cell ID may be a physical cell ID, or may be a virtual cell ID.

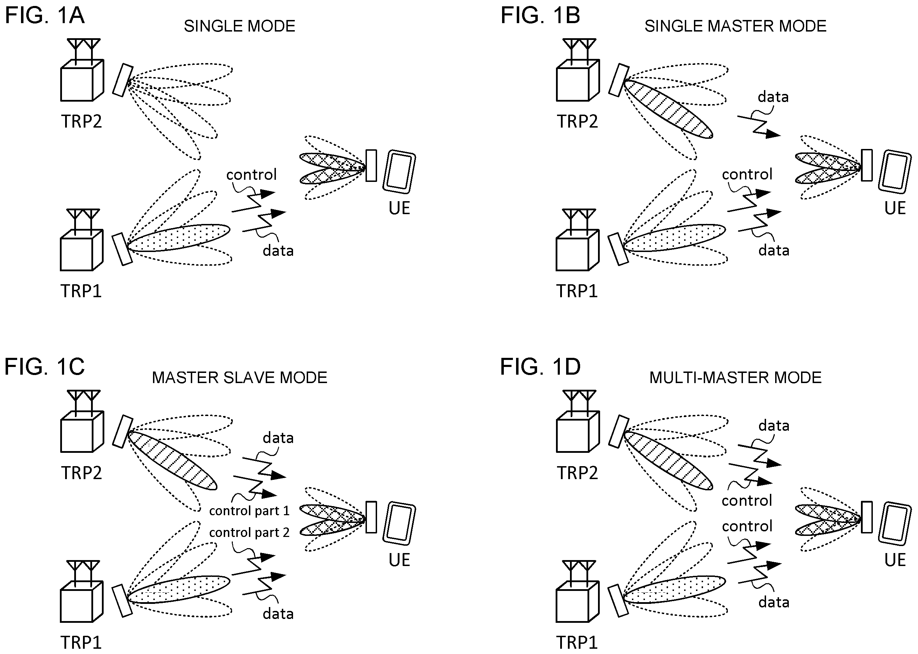

FIGS. 1A to 1D are each a diagram to show an example of a multi-TRP scenario. In these examples, it is assumed that each TRP can transmit four different beams. However, this is not restrictive.

FIG. 1A shows an example of a case (which may be referred to as a single mode, a single TRP, or the like) in which only one TRP (in the present example, TRP 1) out of multiple TRPs performs transmission to the UE. In this case, TRP 1 transmits both of a control signal (PDCCH) and a data signal (PDSCH) to the UE.

FIG. 1B shows an example of a case (which may be referred to as a single master mode) in which only one TRP (in the present example, TRP 1) out of multiple TRPs transmits a control signal to the UE, and the multiple TRPs transmit a data signal thereto. The UE receives each PDSCH transmitted from the multiple TRPs, based on one piece of downlink control information (DCI).

FIG. 1C shows an example of a case (which may be referred to as a master slave mode) in which each of multiple TRPs transmits a part of a control signal to the UE, and the multiple TRPs transmit a data signal thereto. In TRP 1, part 1 of a control signal (DCI) may be transmitted, and in TRP 2, part 2 of the control signal (DCI) may be transmitted. Part 2 of the control signal may depend on part 1. The UE receives each PDSCH transmitted from the multiple TRPs, based on these parts of the DCI.

FIG. 1D shows an example of a case (which may be referred to as a multi-master mode) in which each of multiple TRPs transmits different control signals to the UE, and the multiple TRPs transmit a data signal thereto. In TRP 1, a first control signal (DCI) may be transmitted, and in TRP 2, a second control signal (DCI) may be transmitted. The UE receives each PDSCH transmitted from the multiple TRPs, based on these pieces of DCI.

When a plurality of PDSCHs (which may be referred to as multiple PDSCHs (multiple PDSCHs)) from multiple TRPs as shown in FIG. 1B are scheduled using one piece of DCI, the piece of DCI may be referred to as a single DCI (single PDCCH). When a plurality of PDSCHs from multiple TRPs as shown in FIG. 1D are each scheduled using a plurality of pieces of DCI, the plurality of pieces of DCI may be referred to as multiple pieces of DCI (multiple PDCCHs (multiple PDCCH)).

According to the multi-TRP scenario as described above, more flexible transmission control using a channel having satisfactory quality can be performed.

From each TRP of multiple TRPs, codewords (Code Words (CWs)) and layers different from one another may be transmitted. As one mode of multi-TRP transmission, non-coherent joint transmission (NCJT) has been under study.

In NCJT, for example, TRP 1 applies modulation mapping and layer mapping on a first codeword to obtain a first number of layers (for example, two layers), and transmits a first PDSCH by using first precoding. TRP 2 applies modulation mapping and layer mapping on a second codeword to obtain a second number of layers (for example, two layers), and transmits a second PDSCH by using second precoding.

Note that it may be defined that a plurality of PDSCHs (multiple PDSCHs) to be transmitted using NCJT partially or entirely overlap regarding at least of the time and frequency domains. In other words, at least one of the time and frequency resources of the first PDSCH from the first TRP and the second PDSCH from the second TRP may overlap.

It may be assumed that the first PDSCH and the second PDSCH are not in a quasi-co-location (QCL) relationship (not quasi-co-located). Reception of multiple PDSCHs may be interpreted as simultaneous reception of PDSCHs that are not of QCL type D.

### (HARQ-ACK of Multiple TRPs)

Incidentally, as Hybrid Automatic Repeat reQuest ACKnowledgement (HARQ-ACK) feedback for multiple PDSCHs, separate HARQ-ACK feedback and joint HARQ-ACK feedback have been under study.

The separate HARQ-ACK feedback (which may be referred to as a separate HARQ-ACK) corresponds to feedback in which the UE transmits the HARQ-ACK using separate uplink control channel (Physical Uplink Control Channel (PUCCH))/uplink shared channel (Physical Uplink Shared Channel (PUSCH)) resources for each TRP. The plurality of PUCCH/PUSCH resources may overlap (may be simultaneously transmitted), or may not overlap.

The use of the separate HARQ-ACK enables independent HARQ-ACK transmission for each TRP. Even when a backhaul delay among TRPs is large (for example, when TRPs are connected using a non ideal backhaul), delay of the HARQ is not increased.

The joint HARQ-ACK feedback (which may be referred to as a joint HARQ-ACK) corresponds to feedback in which the UE transmits the HARQ-ACK of each TRP using the same PUCCH/PUSCH resource.

The use of the joint HARQ-ACK enables reduction of resource overhead, because one PUCCH/PUSCH transmission suffices. When a backhaul delay among TRPs is small (for example, when TRPs are connected using an ideal backhaul), the HARQ-ACK that has been transmitted to one TRP can be delivered to another TRP with only a small delay.

Note that the "PUCCH/PUSCH" may mean at least one of a PUCCH and a PUSCH (similarly, "A/B" may be hereinafter interpreted as "at least one of A and B").

The HARQ-ACK in the present disclosure can be interpreted as the separate HARQ-ACK or as the joint HARQ-ACK, unless otherwise specifically noted.

One or a plurality of pieces of DCI for scheduling multiple PDSCHs may include a field for a PUCCH resource indicator (PRI). The PRI corresponds to information for specifying a resource for transmitting the HARQ-ACK corresponding to the PDSCH, and may be referred to as an ACK/NACK resource indicator (ARI).

The UE may determine PUCCH resource(s) for transmitting the HARQ-ACK corresponding to the multiple PDSCHs, based on the PRI.

The PUCCH resource(s) of the separate HARQ-ACK regarding each TRP may or may not be configured to allow temporal overlapping. In order to flexibly control the PUCCH resource(s) of the separate HARQ-ACK, a PUCCH resource group may be used.

For example, the UE configured with the PUCCH resource group from a network may assume that the whole PUCCH resources included in a first PUCCH resource group do not temporally overlap the whole PUCCH resources included in a second PUCCH resource group.

The PUCCH resource group (PRG) may correspond to a PUCCH resource group for the TRP (TRP PUCCH Resource Group (TRP-PRG, T-PRG)), or may correspond to a PUCCH resource group (SRI PUCCH Resource Group (SRI-PRG, S-PRG)) for spatial relation information (SRI) (or an RRC parameter "Spatialrelationinfo", an SRI ID, or the like) of the PUCCH.

The T-PRG may be interchangeably interpreted as a group of PUCCH resources related to multiple TRPs, a group for PUCCH resource allocation, or the like. The S-PRG may be interchangeably interpreted as a group of PUCCH resources for at least one of indication and update of PUCCH SRI, or the like.

The UE may assume that the PUCCH resources belonging to one T-PRG correspond to the same TRP. The UE may assume that the PUCCH resources belonging to a first T-PRG and the PUCCH resources belonging to a second T-PRG correspond to TRPs different from each other.

The UE may assume that the UE uses the same SRI for the PUCCH resources belonging to one S-PRG. The UE may assume that the UE uses pieces of SRI different from each other for the PUCCH resources belonging to a first S-PRG and the PUCCH resources belonging to a second S-PRG.

Further, "group" in the present disclosure may be interpreted as grouping, a sequence, a list, a set, or the like. The resource group may be interpreted as one or a plurality of resources. In other words, the T-PRG, the S-PRG, and the like may each correspond to one or a plurality of resources.

The T-PRG may be interpreted as one or a plurality of resources associated with the same TRP. The S-PRG may be interpreted as one or a plurality of resources associated with the same SRI (or the same reference signal, the same reference signal resource, or the like).

The UE may be configured with correspondence relation between a group ID (group index) and a PUCCH resource ID for each piece of PUCCH configuration information (RRC information element "PUCCH-Config"), for each PUCCH resource set, or for each PUCCH resource.

Note that, when the UE is not explicitly configured with the PUCCH resource group from a network, the UE may group PUCCH resources configured from a network according to a certain rule and regard the grouped PUCCH resources as a PUCCH resource group. A PUCCH group determined (assumed, regarded) without being configured from a network may be referred to as a default PUCCH group.

For example, the UE may determine a PUCCH group to which corresponding PUCCH resources belong, based on a value of a PRI of received DCI. For example, the UE may determine the default PUCCH group to which corresponding PUCCH resources belong, depending on whether a certain bit position (for example, the most significant bit or the least significant bit) of a value (for example, 000 to 111) of a PRI is 1 or 0 (for example, PUCCH group 1 if the certain bit position is 1 and PUCCH group 2 if the certain bit position is 0, or the like).

The UE may determine the PUCCH group to which corresponding PUCCH resources belong, based on a PUCCH resource ID configured from a network by using higher layer signaling. For example, the UE may group corresponding PUCCH resources, depending on whether the PUCCH resource ID is an odd number or an even number, or whether the PUCCH resource ID is larger or smaller than a certain value.

Note that the PUCCH resource group may be configured to be the same for a plurality of PUCCH resource sets, or may be configured to be unique to each PUCCH resource set.

Note that, in the present disclosure, the higher layer signaling may be, for example, any one of Radio Resource Control (RRC) signaling, Medium Access Control (MAC) signaling, broadcast information, and the like, or a combination of these.

The MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

However, how to separately use the separate HARQ-ACK feedback and the joint HARQ-ACK feedback has not yet been fully studied. Unless such control is appropriately performed, spatial diversity gain, high-rank transmission, and the like of a case in which multiple TRPs are used cannot be implemented in a preferable manner, which may suppress increase of communication throughput.

In the light of this, the inventors of the present invention came up with the idea of HARQ-ACK control that can support a case in which multiple TRPs are used.

Embodiments according to the present disclosure will be described below in detail with reference to the drawings. The radio communication methods according to respective embodiments may each be employed individually, or may be employed in combination.

Note that, in the present disclosure, a panel, an Uplink (UL) transmission entity, a TRP, a spatial relation, a control resource set (CORESET), a PDSCH, a codeword, a base station, a certain antenna port (for example, a demodulation reference signal (DMRS) port), a certain antenna port group (for example, a DMRS port group), a certain group (for example, a code division multiplexing (CDM) group, a certain reference signal group, or a CORESET group), and the like may be interchangeably interpreted. A panel Identifier (ID) and a panel may be interchangeably interpreted as each other. A TRP ID and a TRP may be interchangeably interpreted.

In the present disclosure, NCJT, NCJT using multiple TRPs, multiple PDSCHs using NCJT, multiple PDSCHs, a plurality of PDSCHs from multiple TRPs, and the like may be interchangeably interpreted as each other.

Description of each embodiment of the present disclosure will be given based on the assumption that multiple PDSCHs are scheduled using multiple PDCCHs. However, each embodiment of the present disclosure may be applied to a case in which multiple PDSCHs are scheduled using a single PDCCH.

In the following, the PUCCH may be interpreted as a PUSCH.

### (Radio Communication Method)

### <First Embodiment>

In a first embodiment, for example, association between the TRP and the PUCCH resources (which may be the PRG) may be identified based on a CORESET (or a CORESET group) in which the DCI for scheduling the PUCCH resource is detected, or may be identified based on timing at which the PUCCH is transmitted (for example, in which slot transmission is performed, or in which sub-slot transmission is performed).

For example, it is assumed that the UE is configured with CORESETs #0, #1, and #2 as a first CORESET group by using higher layer signaling, and is configured with CORESETs #3 and #4 as a second CORESET group by using higher layer signaling.

When the UE detects DCI for scheduling the PDSCH (and further, the PUCCH corresponding to the PDSCH) and if the CORESET group in which the DCI is detected is the first CORESET group, the UE may assume that the UE transmits the PUCCH to the first TRP. If the CORESET group in which the DCI is detected is the second CORESET group, the UE may assume that the UE transmits the PUCCH to the second TRP. Note that correspondence relation between the TRP and the CORESET group may be configured using higher layer signaling, or may be determined in a specification in advance.

The UE may be configured with different scramble IDs for the first CORESET group and the second CORESET group. In this case, even when time frequency resources overlap in the CORESET belonging to the first CORESET group and the CORESET belonging to the second CORESET group, the UE can appropriately determine a CORESET group (and further, its corresponding TRP) corresponding to the CORESET in which the DCI is detected, based on the scramble ID corresponding to the CORESET.

For example, it is assumed that the UE is configured with n symbols (n is an integer) from the start of a slot as sub-slot #1, and the rest of the symbols (for example, 14-n symbols from the end) as sub-slot #2. Note that the configuration of the sub-slots (symbols corresponding to the sub-slots) as described above may be configured using higher layer signaling, or may be determined in a specification in advance.

When the UE detects the DCI for scheduling the PDSCH (and further, the PUCCH corresponding to the PDSCH), and if the PUCCH resources are included in sub-slot #1, the UE may assume that the UE transmits the PUCCH to the first TRP. If the PUCCH resources are included in sub-slot #2, the UE may assume that the UE transmits the PUCCH to the second TRP. Note that correspondence relation between the TRP and the sub-slot may be configured using higher layer signaling, or may be determined in a specification in advance.

When the UE is commanded to transmit the separate HARQ-ACK in the same slot, the UE may perform control so as to transmit the PUCCH of the i-th TRP in the i-th sub-slot. The number of sub-slots included in a slot may be determined based on the number of TRPs (may be the same as the number of TRPs, for example). The number of TRPs may be two, or may be three or more.

Note that correspondence relation between the TRP and PUCCH transmission timing (for example, a sub-slot index) may be configured using higher layer signaling.

Note that, in the present disclosure, the UE configured with a plurality of TRPs may assume that the UE determines at least one of the TRP corresponding to the DCI, the PDSCH scheduled using the DCI, the TRP corresponding to UL transmission (PUCCH, PUSCH, SRS, or the like), and the like, based on at least one of the following:
- Value of a certain field (for example, a field for specifying the TRP, an antenna port field, or a PRI) included in the DCI
- DMRS (for example, a sequence of the DMRS, a resource, a CDM group, a DMRS port, a DMRS port group, or the like) corresponding to a scheduled PDSCH/PUSCH
- DMRS (for example, a sequence of the DMRS, a resource, a CDM group, a DMRS port, a DMRS port group, or the like) corresponding to the PDCCH in which the DCI is transmitted
- CORESET (for example, an ID of the CORESET, a scramble ID (which may be interpreted as a sequence ID), a resource, or the like) in which the DCI is received

According to the first embodiment described above, the TRP corresponding to the PUCCH can be appropriately determined even when multiple pieces of DCI are used.

### <Second Embodiment>

A second embodiment relates to separate use of the separate HARQ-ACK feedback and the joint HARQ-ACK feedback (which may be referred to as HARQ switching, feedback switching, or the like, or simply referred to as switching).

Note that a method of feedback such as the separate HARQ-ACK feedback and the joint HARQ-ACK feedback may be referred to as a HARQ feedback type, a HARQ feedback mode, or the like. For example, the separate HARQ-ACK feedback may be referred to as feedback type 1 (or A), and the joint HARQ-ACK feedback may be referred to as feedback type 2 (or B), or the like.

In the second embodiment, with the separate HARQ-ACK, it is assumed that a corresponding TRP can be identified based on the CORESET group and the sub-slot described in the first embodiment. In the second embodiment, it may be assumed that, when one of the CORESET group and the sub-slot is used (configured, defined), the other is not used (configured, defined).

For the UE, which feedback type is used may be configured using higher layer signaling (for example, RRC signaling, or the MAC CE). In this case, the feedback type can be semi-statically determined, and thus it can be expected that increase of a processing load of the UE is suppressed.

For the UE, which feedback type is used may be specified using physical layer signaling (for example, DCI). In this case, the feedback type can be dynamically determined, and thus flexible scheduling is enabled.

The UE may determine the feedback type of the PUCCH scheduled using the DCI, based on a certain field in the DCI.

As the certain field, an explicit feedback type field may be specified. For example, the UE may use the separate HARQ-ACK if a value of the field is 0, and may use the joint HARQ-ACK if the value is 1.

The feedback type may be implicitly specified based on another field (for example, a PRI field, or a HARQ Process Number (HPN) field).

For example, the UE may determine the feedback type of a corresponding PUCCH, depending on whether a certain bit position (for example, the most significant bit or the least significant bit) of a value (for example, 000 to 111) of a PRI of received DCI is 1 or 0 (for example, the separate HARQ-ACK if the certain bit position is 0 and the joint HARQ-ACK if the certain bit position is 1, or the like).

For example, the UE may determine the feedback type of a corresponding PUCCH, depending on whether a certain bit position (for example, the most significant bit or the least significant bit) of a value of an HPN of received DCI is 1 or 0 (for example, the separate HARQ-ACK if the certain bit position is 0 and the joint HARQ-ACK if the certain bit position is 1, or the like).

The UE may assume that, if the number of the HPN for multiple TRPs is a certain number (for example, 16), the feedback type field is included in the DCI or the feedback type is specified by using the HPN field. The UE may assume that, if the number of the HPN for multiple TRPs is larger than the certain number (for example, 32), the feedback type field is not included in the DCI, the feedback type is not specified by the HPN field, or the feedback type is specified by the PRI field.

Note that the DCI used for determination as to which feedback type is used may be DCI (PDCCH) satisfying at least one of the following:
- DCI corresponding to a CORESET or a CORESET group corresponding to a specific (for example, minimum or maximum) index out of CORESETs or CORESET groups in which DCI for scheduling a plurality of PUCCHs is received
- DCI corresponding to a PUCCH that starts earlier or later (start symbol comes early or later)
- DCI corresponding to a PDSCH that starts earlier or later
- DCI that starts earlier or later
- DCI corresponding to a PUCCH having a larger or smaller number of symbols
- DCI corresponding to a PDSCH having a larger or smaller number of symbols
- DCI having a larger or smaller number of symbols

According to the second embodiment described above, the feedback type can be appropriately switched to be used.

### <Third Embodiment>

A third embodiment relates to switching of the feedback type, similarly to the second embodiment. The third embodiment is different from the second embodiment in that the third embodiment corresponds to a case in which PUCCH resources corresponding to a plurality of TRPs are allocated to one sub-slot.

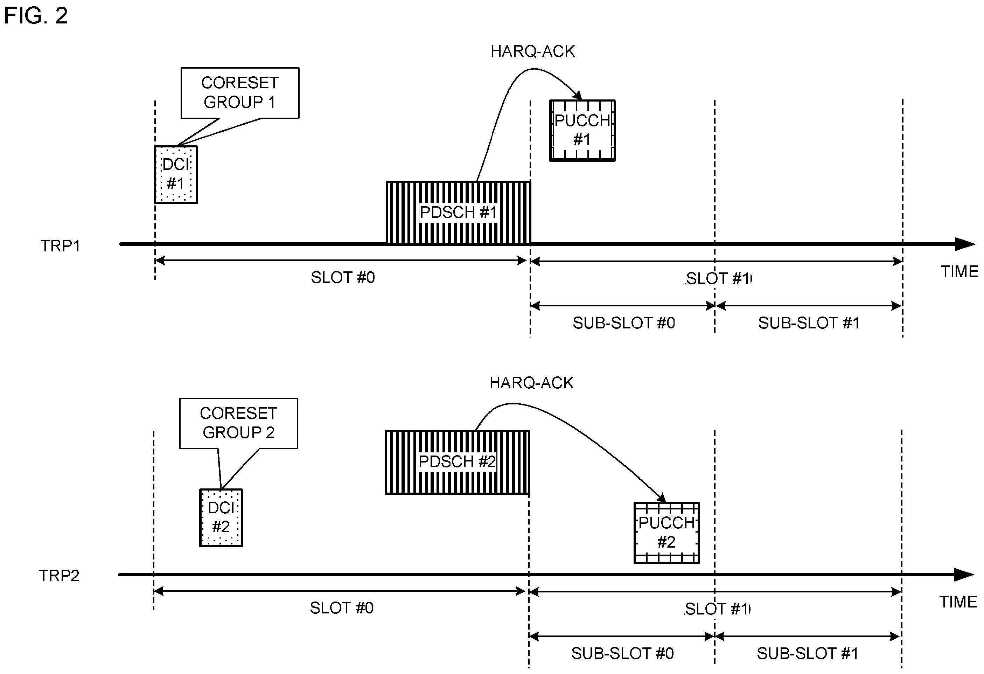

FIG. 2 is a diagram to show an example of switching of the feedback type according to the third embodiment.

In the present example, the UE is configured with multiple TRPs (TRPs 1 and 2). The UE receives DCI #1 indicating PDSCH #1 of TRP 1 from TRP 1, and transmits the HARQ-ACK corresponding to PDSCH #1 to TRP 1 on PUCCH #1. Here, resources of PUCCH #1 may be specified by a certain field (for example, the PRI) in DCI #1.

At timing slightly later than the reception of DCI #1, the UE receives DCI #2 indicating PDSCH #2 of TRP 2 (DMRS port group 2) from TRP 2, and transmits the HARQ-ACK corresponding to PDSCH #1 to TRP 2 on PUCCH #2. Here, resources of PUCCH #2 may be specified by a certain field (for example, the PRI) in DCI #2.

Note that it is assumed that DCI #1 is detected in CORESET group 1, and DCI #2 is detected in CORESET group 2.

PDSCHs #1 and #2 may entirely overlap, may partially overlap, or may not overlap.

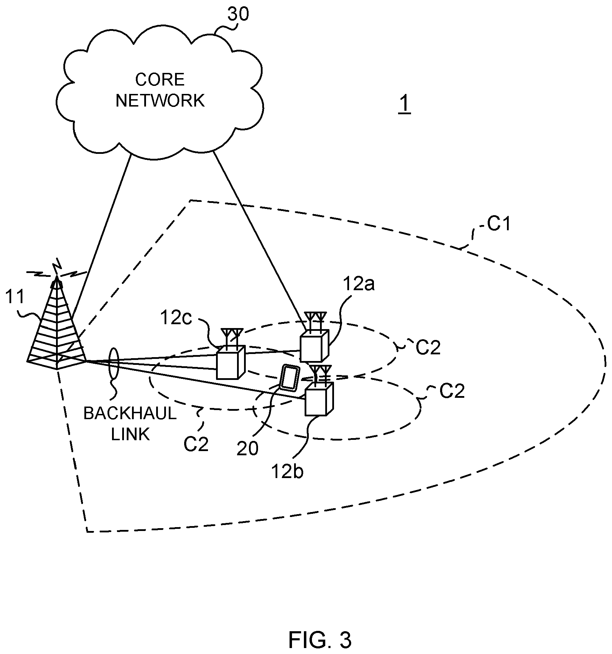

In FIG. 3, both of PUCCHs #1 and #2 are included in the same sub-slot #0. When a plurality of PUCCHs (#1 and #2) corresponding to a plurality of CORESET groups (plurality of TRPs) are scheduled to be transmitted in the same sub-slot as described above, the UE may perform processing based on at least one of the following (1) to (4):
(1) Both the PUCCHs are transmitted
(2) One of the PUCCHs is transmitted, and the other is dropped (the PUCCH to be dropped is determined based on a certain rule)
(3) The HARQ-ACK is multiplexed on one PUCCH
(4) The case is regarded as an error case (for example, processing is performed depending on implementation of the UE)

As shown in FIG. 3, (1) above may be applied when a plurality of PUCCHs transmitted in the same sub-slot do not entirely overlap (both of the time resources and the frequency resources are different from each other), or may be applied when the plurality of PUCCHs partially overlap (at least one of the time resources and the frequency resources overlap).

As the certain rule in (2) above, the PUCCH to be transmitted may be a PUCCH satisfying at least one of the following:
- PUCCH corresponding to a CORESET or a CORESET group corresponding to a specific (for example, minimum or maximum) index out of CORESETs or CORESET groups in which DCI for scheduling a plurality of PUCCHs is received
- PUCCH that starts earlier or later (start symbol comes early or later)
- PUCCH corresponding to a PDSCH that starts earlier or later
- PUCCH corresponding to DCI that starts earlier or later
- PUCCH having a larger or smaller number of symbols
- PUCCH corresponding to a PDSCH having a larger or smaller number of symbols
- PUCCH corresponding to DCI having a larger or smaller number of symbols

In (2) above, the HARQ-ACK of the dropped PUCCH need not be multiplexed on the PUCCH to be transmitted.

In (3) above, the PUCCH resources used for transmission may correspond to one of a plurality of PUCCH resources similarly determined as in (2) above, or may correspond to separately configured or defined PUCCH resources. In (3) above, the HARQ-ACK of the dropped PUCCH is multiplexed on the PUCCH to be transmitted.

In (3) above, it can also be said that the UE that normally uses the separate HARQ-ACK performs feedback using the joint HARQ-ACK when these resources are in the same sub-slot.

In regard to (4) above, the UE need not expect such scheduling that a plurality of PUCCHs corresponding to a plurality of CORESET groups (plurality of TRPs) are transmitted in the same sub-slot.

(2) to (4) above may be applied when a plurality of PUCCHs transmitted in the same sub-slot do not overlap, may be applied when the plurality of PUCCHs partially overlap, or may be applied when the plurality of PUCCHs entirely overlap (in other words, are the same resources).

In the third embodiment, the UE may determine switching of the feedback type as described in the second embodiment except when a plurality of PUCCHs corresponding to a plurality of CORESET groups (plurality of TRPs) are transmitted in the same sub-slot.

According to the third embodiment described above, the feedback type can be appropriately switched to be used.

<Additional Notes>

The UE may be configured with a maximum number of codewords (PDSCHs) that can be scheduled using one piece of DCI (single DCI), using a certain higher layer parameter (for example, an RRC parameter "maxNrofCodeWordsScheduledByDCI"). In existing Rel-15 NR, it is assumed that certain DL DCI (for example, DCI format 1_1) transmitted to the UE configured with 2 (or n2) for the value includes two transport blocks (transport blocks 1 and 2) of fields for a Modulation and Coding Scheme (MCS), a Redundancy Version (RV), and a New Data Indicator (NDI).

In contrast, in the present disclosure, maxNrofCodeWordsScheduledByDCI may indicate a maximum number of codewords that can be scheduled using one piece of DCI for each TRP. In other words, maxNrofCodeWordsScheduledByDCI may be configured for the UE for each TRP. In this case, for example, the UE using (or configured with) multiple TRPs may be configured with maxNrofCodeWordsScheduledByDCI = 1 for each TRP. When multiple TRPs dynamically switch to a single TRP, the UE may assume that only one codeword is transmitted from the single TRP.

maxNrofCodeWordsScheduledByDCI may be configured for the UE for each component carrier (CC). In this case, for example, the UE using (or configured with) multiple TRPs may be configured with maxNrofCodeWordsScheduledByDCI = 1, or 2 or a value greater than 2 for each CC. When multiple TRPs are scheduled, the UE may assume that one codeword is transmitted from one TRP.

Note that the UE using multiple TRPs may instantaneously switch to a single TRP (perform transmission and reception for a single TRP) in at least one of the following cases:
- Case in which, in one or a plurality of symbols (for example, all of the symbols) of a certain PDSCH, simultaneous reception of other PDSCHs not in a relationship of QCL-D with the certain PDSCH is not scheduled
- Case in which a channel state (for example, an SNR) deteriorates, and single TRP transmission is scheduled using DCI
- Case in which one piece of DCI out of multiple pieces of DCI (PDCCHs) misses being detected
- Case in which one TCI state for PDSCH reception is indicated or assumed

Description of the present disclosure is given by mainly taking an example in which uplink control information (UCI) (HARQ-ACK) is transmitted using the PUCCH. However, this is not restrictive. The details of the present disclosure can also be applied to a case (UCI on PUSCH) in which the UCI is transmitted using the PUSCH. The PUSCH may be a PUSCH scheduled using DCI, or may be a configured grant PUSCH. Spatial relation information of the PUCCH may be interpreted as spatial relation information of a reference signal for measurement (Sounding Reference Signal (SRS)) regarding the PUSCH.

The HARQ-ACK of the present disclosure may be interchangeably interpreted as one of or a combination of channel state information (CSI), a scheduling request (SR), and the like.

In the present disclosure, a single PDCCH (DCI) may be referred to as a PDCCH (DCI) of a first scheduling type (for example, scheduling type A (or type 1)). Multiple PDCCHs (DCI) may be referred to as PDCCHs (DCI) of a second scheduling type (for example, scheduling type B (or type 2)).

In the present disclosure, it may be assumed that the single PDCCH is supported when multiple TRPs use an ideal backhaul. It may be assumed that multiple PDCCHs are supported when multiple TRPs use a non ideal backhaul (non-ideal backhaul).

Note that the ideal backhaul may be referred to as DMRS port group type 1, reference signal relation group type 1, antenna port group type 1, or the like. The non ideal backhaul may be referred to as DMRS port group type 2, reference signal relation group type 2, antenna port group type 2, or the like. The terms are not limited to these.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

FIG. 3 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6GHz or less (sub-6GHz), and FR2 may be a frequency band which is higher than 24GHz (above-24GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

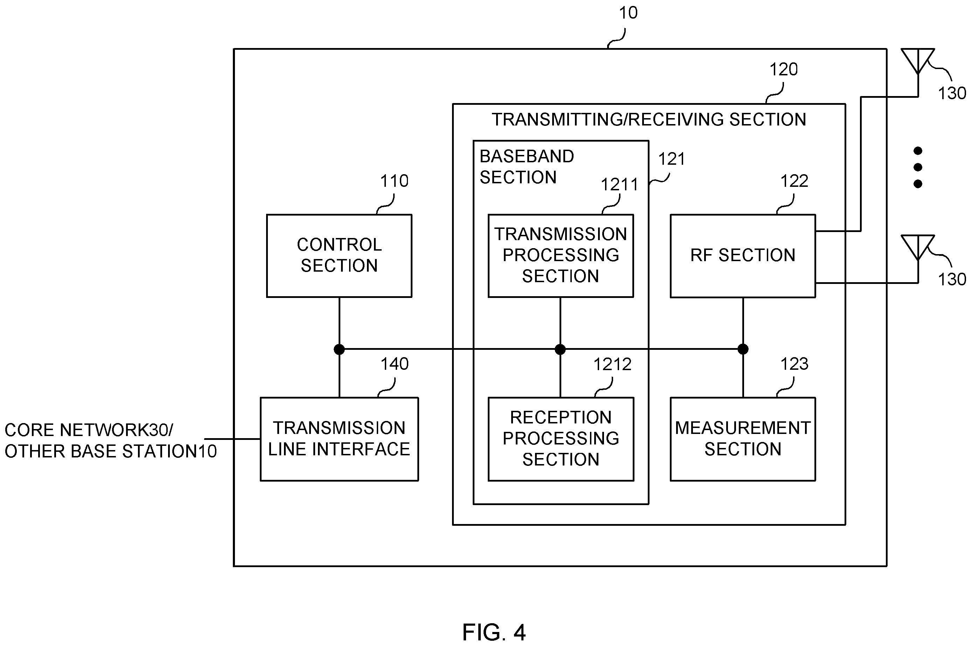

FIG. 4 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the transmitting/receiving section 120 may transmit a PDSCH to the user terminal 20. The control section 110 may control the PDSCH so that at least one of time and frequency resources thereof overlap a PDSCH transmitted from another base station 10.

### (User Terminal)

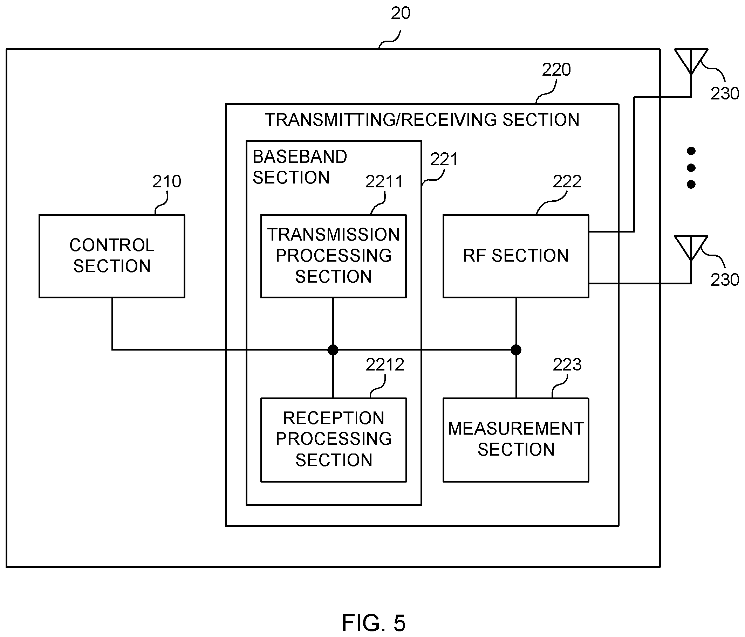

FIG. 5 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223.

The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the transmitting/receiving section 220 may receive a first PDSCH (Physical Downlink Shared Channel) from a first transmission/reception point (TRP), and a second PDSCH from a second TRP whose at least one of time and frequency resources overlaps with the first PDSCH. In other words, the transmitting/receiving section 220 may receive multiple PDSCHs.

The control section 210 may transmit a first Hybrid Automatic Repeat reQuest ACKnowledgement (HARQ-ACK) for the first PDSCH to the first TRP, and control first control (separate HARQ-ACK) of transmitting a second HARQ-ACK for the second PDSCH to the second TRP and second control (joint HARQ-ACK) of transmitting both of the first HARQ-ACK and the second HARQ-ACK to one of the first TRP and the second TRP, based on downlink control information (DCI) for scheduling at least one of the first PDSCH and the second PDSCH.

For example, the control section 210 may switch between the first control and the second control (may determine which control is to be performed), based on at least one of a certain field in the DCI, a group of control resource sets (CORESETs) in which the DCI is received, and the like.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

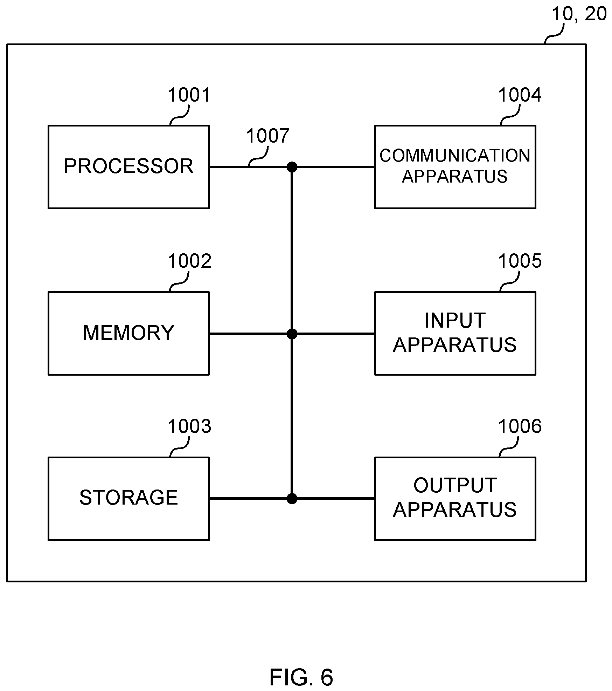

For example, a base station, a user terminal, and so on according to one embodiment of the present disclosure may function as a computer that executes the processes of the radio communication method of the present disclosure. FIG. 6 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a mobile body or a mobile body itself, and so on. The mobile body may be a vehicle (for example, a car, an airplane, and the like), may be a mobile body which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the scope of the invention defined by the claims. Consequently, the description of the present disclosure is provided only for the purpose of explaining examples, and should by no means be construed to limit the invention according to the present disclosure in any way.

## Claims

1. A terminal (20) comprising:
a receiving section (220) configured to receive a first physical downlink shared channel, PDSCH, based on downlink control information, DCI, in a first control resource set, CORESET, and receives a second PDSCH based on DCI in a second CORESET, the second PDSCH overlapping with the first PDSCH in at least one of time and frequency resources; and
a control section (210) configured to perform, based on radio resource control, RRC, signaling indicating whether a first control or a second control is used, the first control to transmit first hybrid automatic repeat request acknowledgement, HARQ-ACK, for the first PDSCH and second HARQ-ACK for the second PDSCH by using different uplink resources, and the second control to transmit the first HARQ-ACK and the second HARQ-ACK by using a same uplink resource.

2. A radio communication method for a terminal (20), comprising:
receiving a first physical downlink shared channel, PDSCH, based on downlink control information, DCI, in a first control resource set, CORESET, and receives a second PDSCH based on DCI in a second CORESET, the second PDSCH overlapping with the first PDSCH in at least one of time and frequency resources; and
performing, based on radio resource control, RRC, signaling indicating whether a first control or a second control is used, the first control to transmit first hybrid automatic repeat request acknowledgement, HARQ-ACK, for the first PDSCH and second HARQ-ACK for the second PDSCH by using different uplink resources, and the second control to transmit the first HARQ-ACK and the second HARQ-ACK by using a same uplink resource.

3. A base station (10) comprising:
a transmitting section (120) configured to transmit, to a terminal (20), a first physical downlink shared channel, PDSCH, based on downlink control information, DCI, in a first control resource set, CORESET, and transmits a second PDSCH based on DCI in a second CORESET, the second PDSCH overlapping with the first PDSCH in at least one of time and frequency resources; and
a control section (110) configured to configure, by using radio resource control, RRC, signaling indicating whether a first control method or a second control method is used, the terminal (20) with either one of the first control method for transmitting first hybrid automatic repeat request acknowledgement, HARQ-ACK, for the first PDSCH and second HARQ-ACK for the second PDSCH by using different uplink resources, and the second control method for transmitting the first HARQ-ACK and the second HARQ-ACK by using a same uplink resource.

4. A system comprising a terminal (20) according to claim 1 and a base station (10) according to claim 3.

## Patentansprüche

1. Endgerät (20), umfassend:
einen Empfangsabschnitt (220), der so konfiguriert ist, dass er einen ersten physikalischen gemeinsam genutzten Downlink-Kanal, PDSCH, auf der Grundlage von Downlink-Steuerinformationen, DCI, in einem ersten Steuerressourcensatz, CORESET, empfängt und einen zweiten PDSCH auf der Grundlage von DCI in einem zweiten CORESET empfängt, wobei sich der zweite PDSCH mit dem ersten PDSCH in mindestens einem von Zeit- und Frequenzressourcen überschneidet; und
einen Steuerabschnitt (210), der so konfiguriert ist, dass er auf der Grundlage der Funkressourcensteuerung, RRC, eine Signalisierung durchführt, die anzeigt, ob eine erste Steuerung oder eine zweite Steuerung verwendet wird, wobei die erste Steuerung eine erste hybride automatische Wiederholungsanforderungsbestätigung, HARQ-ACK, für den ersten PDSCH und eine zweite HARQ-ACK für den zweiten PDSCH unter Verwendung unterschiedlicher Uplink-Ressourcen überträgt, und die zweite Steuerung die erste HARQ-ACK und die zweite HARQ-ACK unter Verwendung derselben Uplink-Ressource überträgt.

2. Funkkommunikationsverfahren für ein Endgerät (20), umfassend:
Empfangen eines ersten physikalischen gemeinsam genutzten Downlink-Kanals, PDSCH, auf der Grundlage von Downlink-Steuerinformationen, DCI, in einem ersten Steuerressourcensatz, CORESET, und einen zweiten PDSCH auf der Grundlage von DCI in einem zweiten CORESET, wobei sich der zweite PDSCH mit dem ersten PDSCH in mindestens einem von Zeit- und Frequenzressourcen überschneidet; und
Durchführen, basierend auf der Funkressourcensteuerung, RRC, einer Signalisierung, die anzeigt, ob eine erste Steuerung oder eine zweite Steuerung verwendet wird, wobei die erste Steuerung eine erste hybride automatische Wiederholungsanforderungsbestätigung, HARQ-ACK, für den ersten PDSCH und eine zweite HARQ-ACK für den zweiten PDSCH unter Verwendung unterschiedlicher Uplink-Ressourcen überträgt und die zweite Steuerung die erste HARQ-ACK und die zweite HARQ-ACK unter Verwendung derselben Uplink-Ressource überträgt.

3. Basisstation (10), umfassend:
einen Übertragungsabschnitt (120), der so konfiguriert ist, dass er an ein Endgerät (20) einen ersten physikalischen gemeinsam genutzten Downlink-Kanal, PDSCH, auf der Grundlage von Downlink-Steuerinformationen, DCI, in einem ersten Steuerressourcensatz, CORESET, überträgt und einen zweiten PDSCH auf der Grundlage von DCI in einem zweiten CORESET überträgt, wobei sich der zweite PDSCH mit dem ersten PDSCH in mindestens einem von Zeit- und Frequenzressourcen überschneidet; und
einen Steuerabschnitt (110), der so konfiguriert ist, dass er unter Verwendung von Funkressourcensteuerung, RRC, eine Signalisierung anzeigt, die angibt, ob eine erste Steuerung oder eine zweite Steuerung verwendet wird, wobei das Endgerät (20) entweder mit dem ersten Steuerverfahren zum Übertragen einer ersten hybriden automatischen Wiederholungsanforderungsbestätigung, HARQ-ACK,
für den ersten PDSCH und einer zweiten HARQ-ACK für den zweiten PDSCH unter Verwendung unterschiedlicher Uplink-Ressourcen oder mit dem zweiten Steuerverfahren zum Übertragen der ersten HARQ-ACK und der zweiten HARQ-ACK unter Verwendung derselben Uplink-Ressource konfiguriert ist.

4. System, umfassend ein Endgerät (20) nach Anspruch 1 und eine Basisstation (10) nach Anspruch 3.

## Revendications

1. Terminal (20) comprenant :
une section de réception (220) configurée pour recevoir un premier canal physique partagé de liaison descendante, PDSCH (physical downlink shared channel), basé sur des informations de commande de liaison descendante, DCI (downlink control information), dans un premier ensemble de ressources de commande, CORESET (control resource set), et recevoir un second PDSCH basé sur des DCI dans un second CORESET, le second PDSCH chevauchant le premier PDSCH dans au moins une ressource parmi des ressources en temps et des ressources en fréquences ; et
une section de commande (210) configurée pour réaliser, sur la base d'une signalisation de commande de ressources radio, RRC (radio resource control), indiquant si une première commande ou une seconde commande est utilisée, la première commande pour transmettre un premier accusé de réception de demande de répétition automatique hybride, HARQ-ACK (hybrid automatic repeat request acknowledgement), pour le premier PDSCH et un second HARQ-ACK pour le second PDSCH en utilisant différentes ressources de liaison montante, et la seconde commande pour transmettre le premier HARQ-ACK et le second HARQ-ACK en utilisant une même ressource de liaison montante.

2. Procédé de communication radio pour un terminal (20), comprenant :
recevoir un premier canal physique partagé de liaison descendante, PDSCH, basé sur des informations de commande de liaison descendante, DCI, dans un premier ensemble de ressources de commande, CORESET, et recevoir un second PDSCH basé sur des DCI dans un second CORESET, le second PDSCH chevauchant le premier PDSCH dans au moins une ressource parmi des ressources en temps et des ressources en fréquences ; et
réaliser, sur la base d'une signalisation de commande de ressources radio, RRC, indiquant si une première commande ou une seconde commande est utilisée, la première commande pour transmettre un accusé de réception de demande de répétition automatique hybride, HARQ-ACK, pour le premier PDSCH et un second HARQ-ACK pour le second PDSCH en utilisant différentes ressources de liaison montante, et la seconde commande pour transmettre le premier HARQ-ACK et le second HARQ-ACK en utilisant une même ressource de liaison montante.

3. Station de base (10) comprenant :
une section de transmission (120) configurée pour transmettre, à un terminal (20), un premier canal physique partagé de liaison descendante, PDSCH, basé sur des informations de commande de liaison descendante, DCI, dans un premier ensemble de ressources de commande, CORESET, et transmettre un second PDSCH basé sur des DCI dans un second CORESET, le second PDSCH chevauchant le premier PDSCH dans au moins une ressource parmi des ressources en temps et des ressources en fréquences ; et
une section de commande (110) configurée pour configurer, en utilisant une signalisation de commande de ressources radio, RRC, indiquant si une première commande ou une seconde commande est utilisée, le terminal (20) avec l'une ou l'autre méthode parmi la première méthode de commande pour transmettre le premier accusé de réception de demande de répétition automatique hybride, HARQ-ACK, pour le premier PDSCH et le second HARQ-ACK pour le second PDSCH en utilisant différentes ressources de liaison montante, et la seconde méthode de commande pour transmettre le premier HARQ-ACK et le second HARQ-ACK en utilisant une même ressource de liaison montante.

4. Système comprenant un terminal (20) selon la revendication 1 et une station de base (10) selon la revendication 3.
